# EUROPEAN PATENT APPLICATION

(11) **EP 2 354 803 A1**
(43) Date of publication of application: **10.08.2011**
(21) Application number: 10305116.5
(22) Date of filing: 04.02.2010
(51) Int. Cl.: G01S 1/00, G01S 19/06, G01S 19/25

(54) **A method for efficient delivery of assisting data**

(71) Applicant: Bluesky Positioning IPCo SARL, 1855 Luxembourg (LU)
(72) Inventor: Savolainen, Risto, 06000, NICE (FR)
(74) Representative: Decobert, Jean-Pascal

(57) **Abstract**

The invention relates to a method for providing Assistance data information to a satellite receiver of a mobile device including wireless communication means wherein Assistance data related to a plurality of satellites are received at the satellite receiver in response to its request, characterized in that it comprises the following steps:
- sending a first request for information to an Assistance data server, said first request comprising at least approximate location data of the mobile device;
- receiving a first response from the Assistance data server, said response comprising at least GPS time data and a list of identifiers of potentially visible satellites at the location of the mobile station;
- making the GPS receiver search for satellite signals for the potentially visible satellites, using the GPS time received with the first response;
- selecting all or a subset of the found satellites;
- sending at least a second request to the Assistance data server for the Ephemeris data respective of the identifiers of all or a subset of the found satellites;
- receiving Ephemeris data corresponding to the satellites identifiers, to enable the satellite receiver to calculate its position.

## Description

### FIELD OF THE INVENTION

The present invention relates to a method and system for providing global positioning information to a mobile station. The term "mobile station" as used here intends to cover all types of mobile devices such as a GPS device embedded in a vehicle, a mobile phone, a SIM card which includes a USIM card, a Smart card or a portable computer. The acronym GPS stands for Global Positioning System which is used here in the sense of a Global Navigation Satellite System which covers Navstar, Galileo or any other GPS system.

### BACKGROUND OF THE INVENTION

GPS systems determine position by receiving signals from a subset (a minimum of 3 satellites for a 2 Dimension determination and a minimum of 4 satellites for a 3 Dimension determination) of a network of satellites (comprising for example 24 satellites) that are in operation. Based on time differences between the signals broadcasted by each satellite, the GPS system calculates the position for the location where the signals are received. This calculation requires accurate information in particular as to the time reference and the orbits of the satellite.

In a traditional satellite positioning system, such as a standard GPS, satellites are transmitting data including navigation messages such as Time data and other supporting data such as, Ephemeris and Almanac data. Time data comprise the satellite constellation time or GPS time. The navigation message changes every second and is repeated every week. Thus the GPS week number and the time of week (in seconds or in date/seconds) can define exact time for the whole constellation.

In general, Ephemeris data are valid for about 4 hours and are updated hourly. They consist of detailed orbital information for the specific observed satellite. Ephemeris data contain information about the satellite's actual deviation from its theoretical orbit. Satellites send continuously their ephemeris data, repeating it every 30 seconds.

Almanac data consists of general information regarding all satellites in the constellation and atmospheric data for the determination of the propagation delays of the RF signals. Almanacs have approximate orbital data parameters for all satellites. They are good for several weeks and are updated every week.

Having the Time data, a GPS receiver can synchronise its own clock (which is usually not accurate for practical design limitations) to the satellite's clock by searching known codes each satellite is transmitted and comparing the received signals to pseudo signal the GPS receiver generates internally.

In order to calculate its position and after locking to the signals of the visible satellites, the GPS receiver needs to download complete Ephemeris from each of the locked satellites. Once this has been done for a minimum of 3 satellites, the position can be calculated. It takes a minimum of 30s and up to several minutes to initialize a GPS system with such a method.

More recently, assisted GPS systems (also known as A-GPS systems) have been used in which the receiver can download useful information called Assistance data (such as the GPS time, the list of potentially visible satellites and their Ephemeris and Almanac data) - from a specific server known as Assistance data server. The communications between the Assistance data server and the receiver can be operated over a mobile network or via Internet. The Assistance data server contains -or is connected to- a GPS receiver that continually downloads and keeps up-to-date the required datasets from the visible satellites. The Assisted GPS systems usually use the OMA (for Open Mobile Alliance) SUPL (for Secure User Plane) standard to ensure the interoperability between the Assistance data server (which is then a SUPL server) and a plurality of Assisted GPS receivers (SUPL clients).

The Assisted GPS system significantly reduces the delay for initialization of the GPS receiver (also known as Time to First Fix or TTFF) but suffers important limitations. When using an A-GPS system with a slow communication channel, the delay for downloading the Assistance data of approximately 2 kilo bytes can be substantial, between 20 seconds up to 1 minute. In formats such as SMS (which stands for Short Message Service), this implies the construction, the transmission, the reception at the receiver and the processing of several messages of 160 bytes each for getting the whole required Assistance data.

It is also difficult to predict which of the satellites that are potentially visible in the general area of the receiver are actually visible. Indeed visibility reasons can occur due to buildings, mountains, trees, or the like. This may block the visibility even for satellites having strong reception signals in the general area of the receiver. When the Assistance data are limited to a reduced subset of visible satellites for bandwidth limitation reasons (for example a subset of the 3 potentially best satellites), there is a risk that some of the transmitted Assistance data are useless because the satellite is actually not usable for the GPS receiver and that the position cannot finally be calculated.

### SUMMARY OF THE INVENTION

The objective of the invention is to overcome at least some of the limitations of the existing GPS systems. More precisely, it relates to a method for providing global positioning information to a GPS receiver or any type or satellite receiver in or communicating with a mobile station including wireless communication means wherein Assistance data related to a plurality of satellites are received at the satellite receiver in response to its request, characterized in that it comprises the following steps:
- sending a first request for information to an Assistance data server, said first request comprising at least approximate location data of the mobile device;
- receiving a first response from the Assistance data server, said response comprising at least GPS time data and a list of identifiers of potentially visible satellites at the location of the mobile station;
- making the GPS receiver search for satellite signals for the potentially visible satellites;
- selecting all or a subset of the found satellites;
- sending at least a second request to the Assistance data server for the Ephemeris data respective of satellite identifiers satellite of the selected satellites identifiers;
- receiving Ephemeris data corresponding to the satellites identifiers, to enable the satellite receiver to calculate its position.

The invention also relates to a mobile station including wireless communication means and a GPS receiver adapted to the execution of the method.

According to the invention, the information required by the mobile station for calculating its position is received in multiple steps. Whereas one could have considered prima facie this method as increasing the complexity and the delay for calculating the mobile station's position, it drastically reduces the volume of data to be transmitted so that the Time To First Fix decreases. In the same time, the data to be transmitted to the receiver are defined so that the mobile station is ensured to be capable of using them to calculate its position.

Some optional and not limitative features of the invention are given hereafter:
- the subset of satellites consists of 3 satellites,
- the method comprising the steps of:
   ■ selecting at least a fourth found satellite,
   ■ sending an additional request for ephemeris data about the at least fourth found satellite to the Assistance data server,
   ■ receiving ephemeris data for the at least fourth or subsequent found satellite(s),
- the wireless communication means is a cellular network system,
- the Ephemeris data for the subset of satellites are transmitted within a single cellular message,
- the cellular message is in Short Message Service format or in Unstructured Supplementary Service Data format,
- selecting a subset of the found satellites is done based on the quality or strength of the received satellite signals and /or the satellite orbits.
- it comprises, after the first fix, the further steps of:
   ■ continuing making the satellite receiver search for satellite signals;
   ■ upon detection of other satellites identifiers, sending further requests for Ephemeris data for the found satellites
   ■ receiving Ephemeris data for the other satellites
- a further request is sent to the Assistance data server for each of the subsequent satellites.

### BRIEF DESCRIPTION OF THE DRAWINGS

Figure 1 depicts the overall structure of a classical Assisted GPS system.
Figure 2 shows a method for transmitting assistance data according to the prior art.
Figure 3 is a diagram of some steps of transmission in a preferred embodiment of the invention.
Figure 4 depicts an example of length of the messages and the global delay of the data transmission.

### DETAILED DESCRIPTION

The following detailed description of the invention refers to the accompanying drawings. While the description includes exemplary embodiments, other embodiments are possible and changes may be made to the embodiments described without departing from the scope and spirit of the invention.

Unless expressly indicated in the following detailed description, the invention may use components such as hardware components, software, algorithms, communication networks and formats known as such and commonly used in the field of Assisted GPS systems. This is particularly the case for the general design of the Assistance server, the GPS receiver, the communications means used between the mobile station or the SIM (Subscriber Identity Module) card in a mobile station and the Assistance server. The SIM card is used in its broad meaning within this application and it includes USIM which stands for Universal Subscriber Indentity Module. A classical A-GPS device can be used with computer program instructions which, when executed by the device, are adapted to produce the steps of the method of the invention.

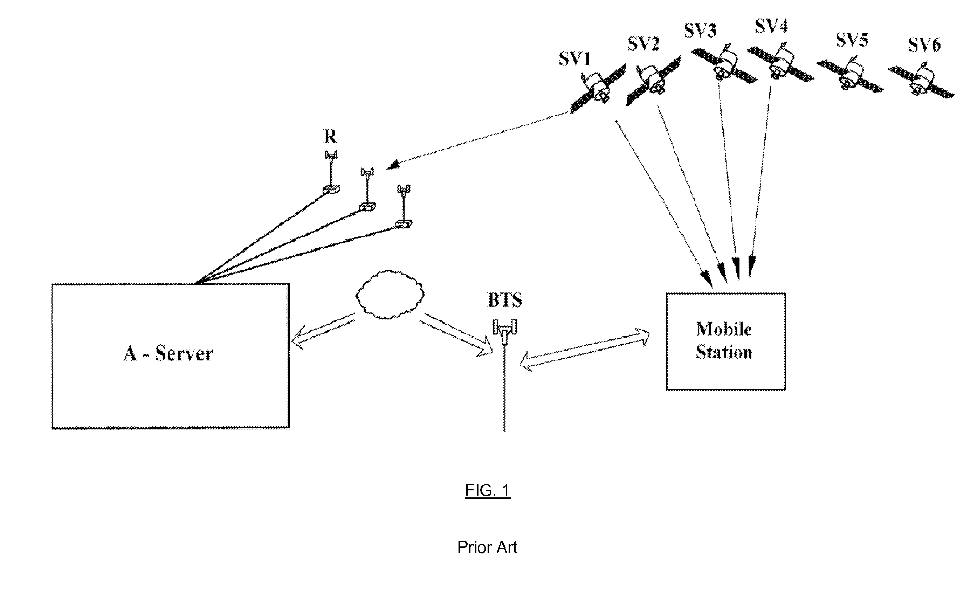

Figure 1 shows an example of assisted GPS system. A plurality of GPS satellites (commonly 24) is in orbits and some of them are visible to a GPS receiver in a mobile station so that Satellite signals are received at the GPS receiver to calculate the position of the mobile station.

For the start up of the system, assistance data are obtained from an Assistance data server (A-server) in communication with the mobile station which comprises communication means such as a cell phone. In this case, the transmissions are done over a cellular network (e.g. GSM or Global System for Mobile communications) using base transceiver stations (BTS). Base transceiver stations (BTS) define cell sites providing with a rough position of the mobile station.

The A-server has the following functions and advantages:
- It can provide an approximate location of the mobile station based on the BTS it is connected to on the cellular network;
- The antenna of the GPS receiver of an A-server can be placed to have good satellite signals and the A-server can have enough computation power to efficiently obtain and process satellite data. Satellite signals may be transmitted via relays R.

An A-GPS enabled mobile device can use an internet connection and/or cellular network to contact the A-server.

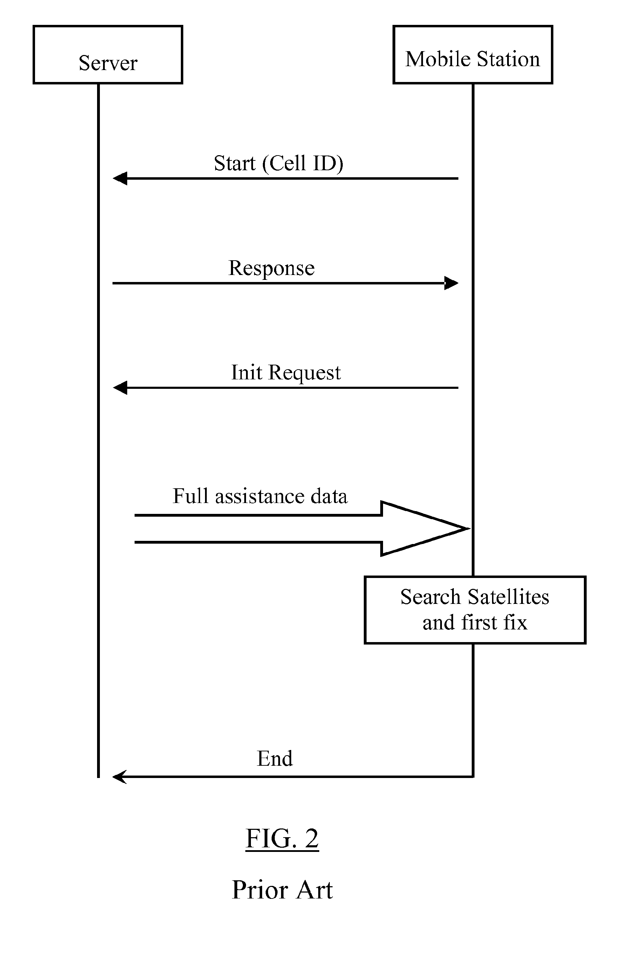

Transmission of assistance data according to the prior art is depicted in figure 2. A request is sent by the A-GPS device with a cell identifier providing a rough position of the mobile device. The A-server replies with a full set of Assistance data for the satellites visible in the area of the mobile device. The A-GPS device uses these data and makes a fix with the relevant satellites. The communication with the A-server ends and the position is being calculated.

In contrast with this method, the invention proposes a new chain of actions wherein different steps of communication occur between the mobile device and the A-server.

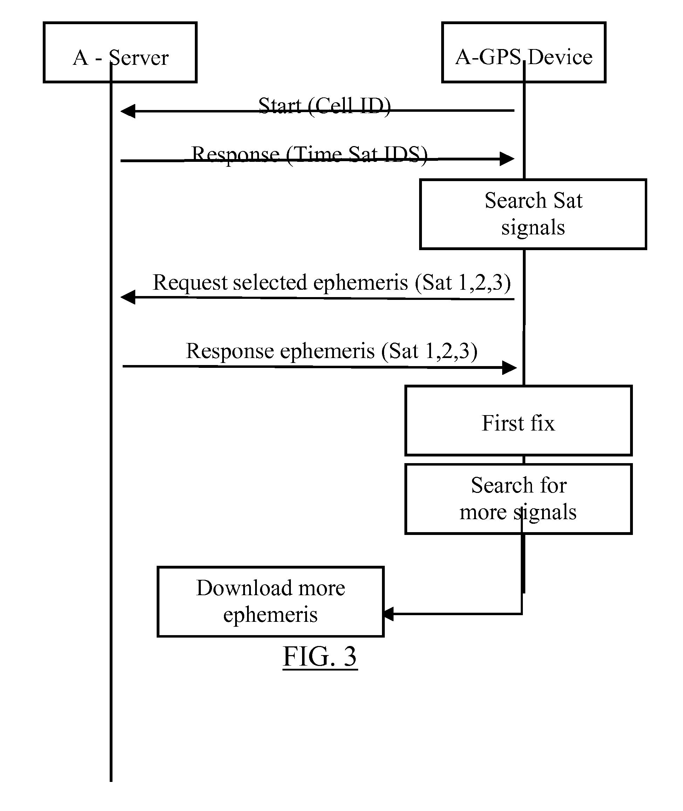

In this perspective Figure 3 depicts an embodiment in which the mobile device first sends a request for general information with an indication of its position (which may be produced by the cell identifier of BTS by which the mobile station is connected to the cellular network). The general information may include further data such as the last coordinates stored in the mobile station's memory and/or a description of identifiers and dates of the last Ephemeris stored in the mobile station. This may increase the accuracy of the rough position of the mobile station and sometimes prevent the further transmission of some of the Ephemeris data.

The A-server replies with data related to the GPS Time and a list of potentially visible satellites (SV1 to 5 in figure 1). This list is advantageously a set of satellite ID (for identifier) codes.

With this information the GPS receiver of the mobile station updates its internal clock and satellite tables. It then starts searching for available signals from satellites among the list of potentially visible satellites. Based on selection criteria, the mobile station determines the best satellites to operate with for the calculation of the position. Criteria may comprise the strength of the satellite signals (like the best signal to noise ratios) and the most favourable orbits of the satellites. For example the satellites IDs can be sorted according to the quality or strength of the received signals and the three (or four) strongest can be selected. However if some of the elected satellites have substantially coplanar orbits, the selection is refined and one (or more) of the three (or four) elected satellites is replaced by another, in particular the following by order of signal quality or strength.

Once the three (or four) best satellites have been determined, the GPS receiver locks to them and sends a second request to the A-server to get their Ephemeris data. According to a standard case, the Ephemeris data for three satellites can be limited to about 120 bytes (3*40 bytes) which is compliant with a transmission within a single message of the SMS type (for Short message service) or of the USSD type (for Unstructured Supplementary Service Data).

Almanac data need not to be systematically transmitted with the method of the invention. If no long term prediction is required for the GPS receiver, the Ephemeris data are sufficient for the calculation of the position.

If Assistance data are requested for more than three satellites, the A-server advantageously first reply with data from the first three ones and sends at least another message for the subsequent satellite(s). For example, a first message may enable the GPS receiver to perform a first 2D determination of the position. An optimized 3D determination is made thereafter upon reception of another message containing the assistance data for a fourth satellite.

As more satellites are detected, the GPS receiver can request the corresponding Assistance data from the A-server or alternatively download the same from the satellites.

An example of USSD messages is given hereafter in which the acronym DCS stands for Data Coding Scheme. It clearly appears that the first message gives sufficient data to the mobile station for its first fix:
- USSD #1 DCS + Common part + Data SV #1 + Data SV #2 + Data SV #3 + Padding
- USSD #2 DCS + Data SV #4 + Data SV #5 + Data SV #6 + first half part Data SV #7
- USSD #3 DCS + second half part Data SV #7 + Data SV #8 + Data SV #9 + half part Data SV #10 + Padding.

If the network or mobile station do not support "full length" USSD or SMS messages, the data described above can be split in smaller sets in order to optimize data delivery to the GPS receiver.

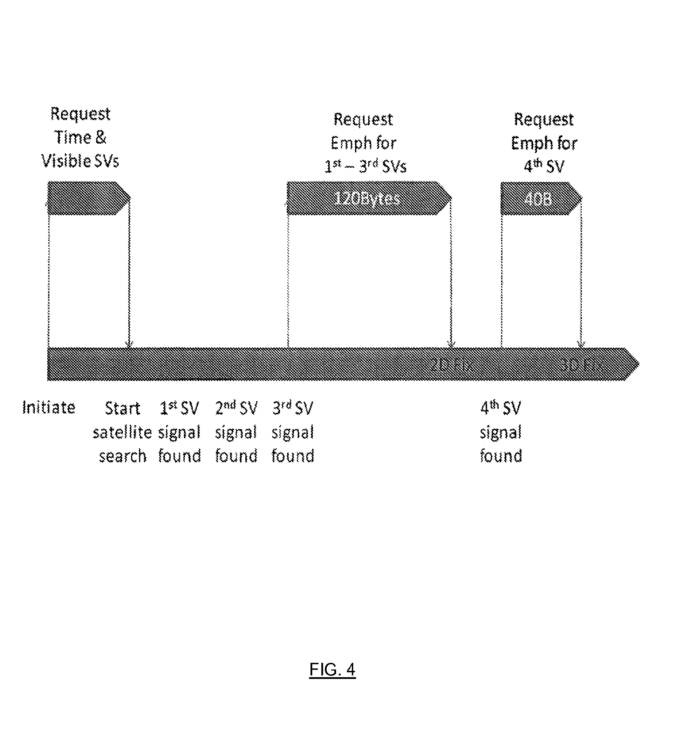

Figure 4 reveals that the invention minimizes the time required for a first position calculation and that the messages to be exchanged are very short which is particularly useful for slow networks and suitable for use with low bandwidth communication channels.

## Claims

1. Method for providing Assistance data information to a satellite receiver of a mobile device including wireless communication means wherein Assistance data related to a plurality of satellites are received at the satellite receiver in response to its request, **characterized in that** it comprises the following steps:
- sending a first request for information to an Assistance data server, said first request comprising at least approximate location data of the mobile device;
- receiving a first response from the Assistance data server, said response comprising at least GPS time data and a list of identifiers of potentially visible satellites at the location of the mobile station;
- making the GPS receiver search for satellite signals for the potentially visible satellites, using the GPS time received with the first response;
- selecting all or a subset of the found satellites;
- sending at least a second request to the Assistance data server for the Ephemeris data respective of the identifiers of all or a subset of the found satellites;
- receiving Ephemeris data corresponding to the satellites identifiers, to enable the satellite receiver to calculate its position.

2. Method of claim 1 wherein the subset of satellites consists of at least 3 satellites.

3. Method of claim 2 comprising the further steps of:
- selecting at least a fourth found satellite,
- sending an additional request for ephemeris data about the at least fourth found satellite to the Assistance data server,
- receiving ephemeris data for the at least fourth or subsequent found satellite(s).

4. Method according to any of the preceding claims wherein the wireless communication means is a cellular network system.

5. Method according to claim 4 wherein the Ephemeris data for the subset of satellites are transmitted within a single cellular message.

6. Method according to claim 5 wherein the cellular message is in Short Message Service format or in Unstructured Supplementary Service Data format.

7. Method according to any of the preceding claims wherein selecting a subset of the found satellites is done based on the quality or strength of the received satellite signals and /or the satellite orbits.

8. Method according to any of the preceding claims comprising, after the first fix, the further steps of:
- continuing making the satellite receiver search for satellite signals;
- upon detection of other satellites identifiers, sending further requests for Ephemeris data for the found satellites
- receiving Ephemeris data for the other satellites.

9. Method of claim 8 wherein the further request is sent to the Assistance data server.

10. Method of claim 8 wherein the further request is sent to the Assistance data server for each of the subsequent satellites.

11. Mobile device including a Subscriber Identity Module, a wireless communication means and a satellite receiver, adapted to the execution of the method according to any of the preceding claims.
